# FASCICULE DE BREVET EUROPEEN

(11) **EP 1 254 437 B1**
(45) Date de publication et mention de la délivrance du brevet: **28.06.2006**
(21) Numéro de dépôt: 01903994.0
(22) Date de dépôt: 30.01.2001
(51) Int. Cl.: G07F 7/10

(54) **ACTIVATION DE SERVICE PAR CARTE PRE-PAYEE VIRTUELLE**
DIENSTAKTIVERUNG MITTELS EINER VIRTUELLEN VORAUSBEZAHLTEN KARTE
SERVICE ACTIVATION BY VIRTUAL PREPAID CARD

(30) Priorité: 09.02.2000 FR 0001681
(43) Date de publication de la demande: 06.11.2002
(73) Titulaire: FRANCE TELECOM, 75015 Paris (FR)
(72) Inventeur: ARDITTI, David, F-92140 Clamart (FR); MACARIO-RAT, Gilles, F-92130 Vanves (FR); MOUTON, Dimitri, F-75015 Paris (FR); BUGAULT, Nicolas, F-75015 Paris (FR)
(74) Mandataire: Lapoux, Roland
(86) Numéro de dépôt international: PCT/FR2001/000276
(87) Numéro de publication internationale: WO 2001/059726

(56) Documents cités:
- WO-A-99/33033
- US-A- 4 650 975
- US-A- 5 696 908
- US-A- 5 991 413

## Description

La présente invention concerne un procédé d'activation de cartes pré-payées virtuelles.

En référence au brevet français FR 2750273, une carte pré-payée permet à son porteur de recevoir un service de la part d'un fournisseur de service, le paiement de ce service étant réalisé par avance lors de l'achat de la carte.

On doit distinguer la carte pré-payée virtuelle de la carte pré-payée non virtuelle. Pour une carte pré-payée virtuelle, toutes les caractéristiques de la carte, en particulier son crédit, sont gérées par un serveur centralisé. Pour une carte pré-payée non virtuelle, la carte elle-même contient un circuit intégré avec microcontrôleur qui contient toutes les caractéristiques de la carte, y compris le crédit restant. La Télécarte (marque déposée) est un exemple de carte pré-payée non virtuelle.

L'invention ne concerne que les cartes pré-payées virtuelles, dites également "jetons virtuels".

A la différence des cartes pré-payées non virtuelles, qui comprennent nécessairement un moyen électronique constitué par le circuit intégré, les cartes pré-payées virtuelles peuvent être de deux sortes :
- les cartes pré-payées virtuelles immatérielles, qui sont constituées d'un code d'identification, généralement un numéro, qui est par exemple lisible sur la carte après grattage ;
- les cartes pré-payées virtuelles matérielles, qui sont constituées d'un dispositif physique, par exemple au moins une mémoire dans laquelle le code d'identification a été pré-enregistré.

Préalablement à l'utilisation d'une carte pré-payée virtuelle, pour accéder à un service, les opérations suivantes sont exécutées :
- fabrication de la carte avec association du code d'identification ;
- mémorisation du code d'identification dans un serveur informatique d'authentification ;
- vente de la carte ;
- authentification de la carte achetée par le serveur ;
- fourniture d'un service ;
- dialogue avec le serveur permettant au fournisseur de service de connaître le crédit restant et les autres paramètres de la carte pré-payée virtuelle, et de mettre à jour le crédit de la carte pré-payée virtuelle.

L'utilisateur achète auprès d'un distributeur-commerçant une carte pré-payée virtuelle. Elle est initialement créditée, lors de sa fabrication, d'un certain nombre d'unités, correspondant à son prix d'achat. Une unité permet de payer une part indivisible d'un service. Ce peut être de manière générale une unité monétaire ou une taxe de base, dans le cas d'une prestation téléphonique, ou une minute de communication, ou bien toute autre fraction d'un service.

La gestion de la carte pré-payée virtuelle est réalisée par le serveur informatique dont le rôle est de tenir à jour le crédit en unités de la carte ainsi que certaines données complémentaires telles que dates de validité, mise en opposition, etc.

Pour obtenir un service de la part du fournisseur de service, l'utilisateur doit d'abord prouver qu'il est en possession d'une carte pré-payée virtuelle. Pour cela, le serveur authentifie la carte.

En référence au brevet US 5991413, cette fonction d'authentification consiste à vérifier la validité d'une séquence de symboles qui est transmise au serveur :
- pour les cartes pré-payées virtuelles immatérielles, cette séquence est le code d'identification de la carte, que l'utilisateur communique par un moyen terminal au serveur ;
- pour les cartes pré-payées virtuelles matérielles, à chaque activation par l'utilisateur, une séquence différente de symboles, constituant un code d'identification, est calculée de manière cryptographique par le circuit intégré inclus dans la carte ; le circuit intégré peut la transmettre lui-même au serveur ou être capable seulement de la communiquer au moyen terminal qui la transmet ; ceci constitue une méthode d'authentification sûre.

Si l'authentification de la carte pré-payée virtuelle est réussie, le serveur indique au fournisseur de service le crédit restant sur la carte de l'utilisateur. Cette information peut, de manière optionnelle, être transmise à l'utilisateur.

Le fournisseur de service peut alors, en s'adressant au serveur, débiter le compte de l'utilisateur en fonction du service rendu. Ce débit peut être réalisé soit avant la fourniture du service, soit au fur et à mesure de la fourniture du service, soit une fois le service rendu, soit par une combinaison de ces divers procédés.

On constate que le fournisseur n'est pas informé de l'achat d'une carte pré-payée virtuelle. Le fournisseur doit donc considérer qu'une carte pré-payée virtuelle est utilisable pendant toute la période où elle est potentiellement en vente, c'est-à-dire en stock chez le fournisseur, puis chez le distributeur et enfin à l'étalage dans le magasin.

Ni le fournisseur avant la livraison au distributeur, ni le distributeur avant la vente de la carte, ne sont à l'abri du vol de la carte pré-payée virtuelle, c'est-à-dire du vol du support matériel ou simplement du code d'identification lui-même dans le cas d'une carte pré-payée virtuelle immatérielle ; ou du vol de la carte elle-même dans le cas d'une carte pré-payée virtuelle matérielle.

L'état de la technique a ainsi pour principal inconvénient qu'une carte pré-payée virtuelle volée donne droit au service au même titre qu'une carte pré-payée virtuelle légitimement acquise.

Le brevet US-A-5 903 633 propose d'enregistrer préalablement un code de contrôle avec un code classique PIN (Personal Identification Number) dans une carte téléphonique à bande magnétique, les codes étant en partie visibles sur la carte et en partie cachés et lisibles après grattage. Avant que le revendeur (retailer) de la carte vend ou transfert la carte à l'utilisateur final, un terminal point de vente transmet le code de contrôle à un ordinateur central. La base de données de l'ordinateur vérifie la correspondance entre le code de contrôle et le numéro téléphonique du terminal du revendeur afin de valider l'achat de la carte et commander la facturation de la carte au revendeur dans un ordinateur de facturation. Puis l'utilisateur possédant la carte achetée utilise classiquement la carte téléphonique payée après validation du code PIN dans un appareil téléphonique.

Si la vérification préalable du code de contrôle évite une utilisation frauduleuse du code PIN, elle nécessite que chaque revendeur soit équipé d'un terminal pouvant lire et transmettre le code de contrôle à un ordinateur central spécifique. De plus, n'importe qui, avant d'acheter la carte, peut avoir connaissance du code de contrôle ce qui incite aux fraudes.

L'objectif de l'invention est de s'affranchir des inconvénients présentés ci-dessus afin de n'autoriser l'accès au service visé qu'à l'utilisateur d'une carte pré-payée virtuelle légitimement acquise et interdire cet accès à une personne malintentionnée ayant eu connaissance du code.d'identification de la carte.

Aux fins d'atteindre cet objectif, un procédé pour activer un service à l'aide d'une carte pré-payée dans un moyen de fourniture de service depuis un moyen terminal d'utilisateur, un premier code nécessaire à l'utilisation du service étant associé à la carte et mémorisé dans le moyen de fourniture de service préalablement au paiement de la carte, est caractérisé en ce qu'il comprend les étapes, successives énoncées dans la revendication 1.

Le moyen terminal d'utilisateur peut être un terminal électronique du type téléphonique et/ou téléinformatique, comme on le verra dans la suite, ou bien représente une interface homme-machine entre l'utilisateur et un serveur par exemple par l'intermédiaire de la voie postale pour transmettre les deux codes au fournisseur du service téléphonique ou par l'intermédiaire d'un opérateur spécialement affecté à la validation des cartes.

Le premier code correspond au code d'identification, généralement un numéro, selon la technique antérieure. Le deuxième code est ajouté par l'invention et ne peut être connu que par l'acheteur de la carte au moment du paiement de celle-ci, ce qui empêche la connaissance de celui-ci par un voleur de carte chez le distributeur.

Le deuxième code, tout comme le premier code doit être authentifié pour certifier la validation de la carte avant sa première utilisation. Toutefois, le deuxième code n'est pas nécessaire pour l'utilisation de la carte, et est même effacé de moyens, tels que serveurs, authentifiant la carte dès que l'utilisation de la carte est autorisée, ce qui ne change pas les habitudes des utilisateurs de cartes pré-payées virtuelles.

L'invention offre ainsi les avantages qu'aucune utilisation indue de la carte n'est possible dès sa création et jusqu'à sa première utilisation par l'acquéreur légitime et que la validation de la carte avant la première utilisation est sûre aussi bien pour le fournisseur de service et le distributeur de carte que pour l'utilisateur.

De préférence, chaque étape d'authentifier un code peut comprendre les étapes de :
transmettre le code depuis le moyen terminal vers le moyen d'authentification ayant pré-mémorisé une liste de codes,
rechercher le code transmis dans le moyen d'authentification, et
effacer le code pré-mémorisé en réponse au code transmis trouvé dans le moyen d'authentification, et poursuivre le procédé.

Selon une réalisation préférée de l'invention, les étapes d'authentifier les premier et deuxième codes sont exécutées respectivement dans des premier et deuxième moyens d'authentification communiquant avec le moyen terminal à travers un serveur de message au moins vocal. Le deuxième serveur transmet un identificateur de service qui est de préférence tout ou partie du deuxième code au moyen de fourniture de service, les parties du deuxième code pouvant être la valeur de la carte et/ou un numéro de facture d'achat de la carte et un identificateur du service et/ou du fournisseur du service et/ou de l'émetteur de la carte. Le service est activé lorsque le premier code authentifié transmis par le deuxième moyen d'authentification au moyen de fourniture de service est retrouvé en correspondance avec l'identificateur de service dans une table pré-mémorisée du moyen de fourniture de service.

Le moyen de fourniture de service peut être désigné par une adresse en correspondance avec les premier et deuxième codes authentifiés dans les deuxième et premier moyens d'autentification afin de transmettre depuis ceux-ci le premier code authentifié et l'identificateur de service au moyen de fourniture de service.

Selon une autre caractéristique de l'invention, le service est réputé activé quand le moyen de fourniture de service efface l'identificateur de service, qui est de préférence tout ou partie du deuxième code authentifié, ou change d'état l'indicateur d'activation de service, dans une table pré-mémorisée du moyen de fourniture de service, après que le premier code authentifié soit retrouvé en correspondance avec l'identificateur de service ou avec l'indicateur d'activation de service à un état prédéterminé.

Lors de l'utilisation de la carte, le moyen de fourniture de service peut n'autoriser l'accès au service activé qu'en réponse au premier code transmis par le moyen terminal et à une vérification d'une absence d'identificateur de service, ou à une vérification d'un autre état prédéterminé de l'indicateur d'activation de service, en correspondance avec le premier code dans la table.

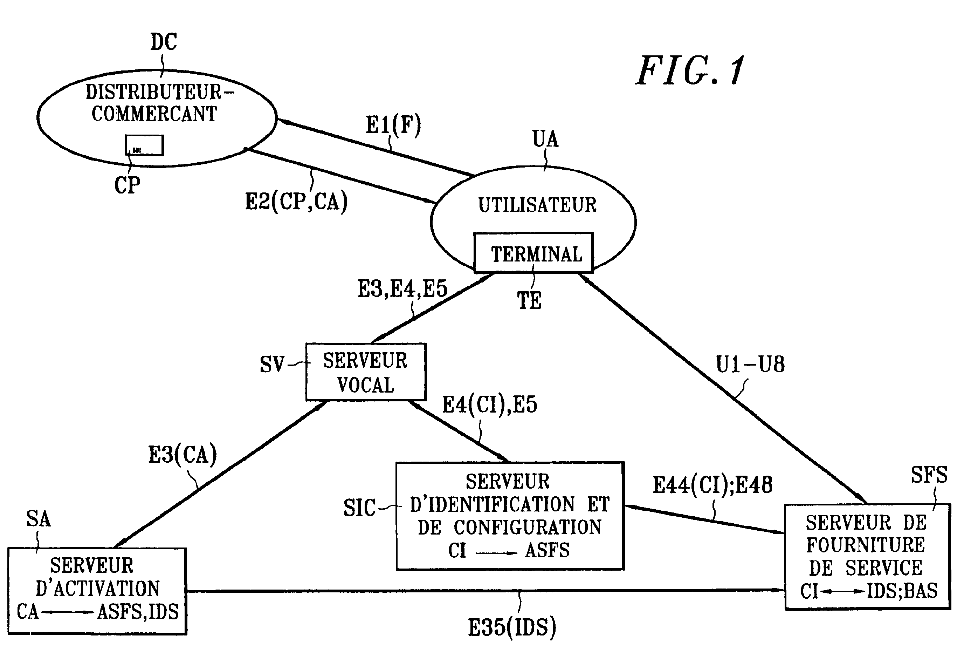

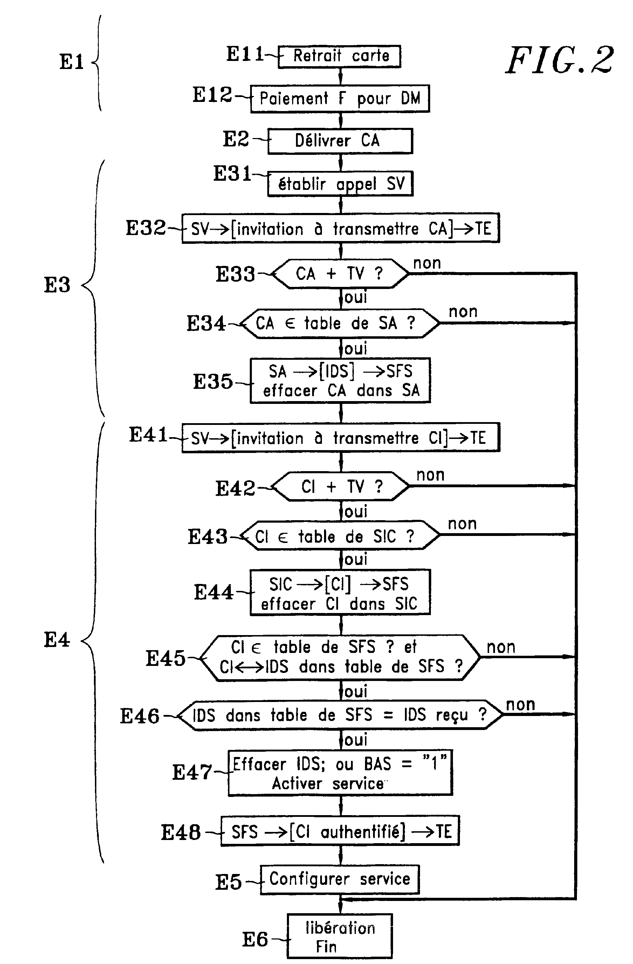

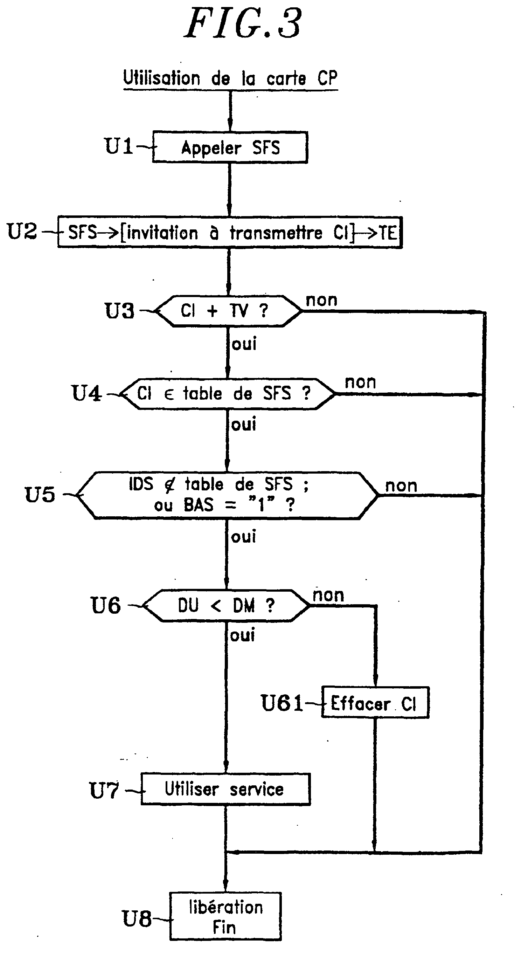

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme fonctionnel schématique d'un système de communication pour la mise en oeuvre du procédé d'activation de service selon une réalisation préférée de l'invention ;
- la figure 2 est un algorithme du procédé d'activation de service ; et
- la figure 3 est un algorithme d'utilisation du service activé.
   Bien que l'invention s'applique à divers objets, qu'ils soient des services proprement dits ou qu'ils soient des produits obtenus indirectement par des services, une réalisation préférée du procédé d'activation de l'invention est décrite ci-après pour activer un service offert par un fournisseur de services téléphoniques et acquis au moyen d'une carte pré-payée CP. La carte CP est une carte pré-payée virtuelle "immatérielle", comportant simplement un code d'identification CI seulement nécessaire, à l'exclusion de tout autre code, pour chaque accès au service après qu'il ait été activé selon l'invention, la carte ne comportant aucun circuit intégré et étant appelée dans la suite "carte pré-payée". Le code CI est lisible sur la carte après grattage d'une zone prédéterminée. Le service consiste à mettre à la libre disposition d'un utilisateur, acheteur et porteur de la carte CP, un répondeur-enregistreur téléphonique dédié à une ligne téléphonique fixe sélectionnée par l'utilisateur-acheteur et interrogeable à distance depuis n'importe quel poste téléphonique, y compris radiotéléphonique, pendant une durée maximale DM de quelques mois pour un forfait F pré-payé lors de l'achat de la carte.
   En référence à la figure 1, un système d'activation du service visé pour la mise en oeuvre du procédé de l'invention comprend les fonctionnalités suivantes, outre un utilisateur-acheteur UA du service, et un distributeur-commerçant DC mettant en vente des cartes pré-payées CP, un serveur vocal SV relié à un serveur d'activation SA et à un serveur d'identification et de configuration SIC, et un serveur de fourniture de service SFS. Tous ces serveurs sont accessibles par des réseaux de télécommunications appropriés, par exemple téléphoniques et/ou radiotéléphoniques et/ou téléinformatiques, y compris le réseau internet, depuis un terminal utilisateur TE qui peut être un poste téléphonique ou radiotéléphonique, ou un micro-ordinateur équipé d'un modem, ou bien encore un terminal vidéotex. Les serveurs SV, SA, SIC et SFS peuvent communiquer entre eux à travers des liaisons spécialisées ; en particulier, les serveurs SV, SA et SIC sont en général localisés dans un site géographiquement éloigné du site du serveur SFS qui est géré par le fournisseur de service, un opérateur téléphonique, et qui offre l'accès au répondeur-enregistreur téléphonique dédié à la ligne téléphonique sélectionnée.
   Comme montré à la figure 2, le procédé d'activation de service selon l'invention, avant une première utilisation de la carte de prépaiement CP, comprend principalement une étape de paiement E1, une étape de délivrance de code d'activation E2, une étape d'authentification de code d'activation E3, et une étape d'authentification de code d'identification E4, de manière à activer le service dans le serveur SFS après les deux authentifications et le cas échéant à configurer ce service à une étape L5 avant toute utilisation du service activé et configuré dont le déclenchement est décrit ultérieurement en référence à la figure 3. Les étapes E1, E3 et E4 comprennent des sous-étapes E11 et E12, E31 à E35 et E41 à E48 respectivement.
   Initialement à l'étape E1, l'utilisateur-acheteur UA retire en rayon du distributeur-commerçant DC, tel qu'une grande surface de distribution, une carte pré-payée CP sous blister correspondant au service visé de répondeur-enregistreur téléphonique, ou à un ensemble de services déterminés, par exemple des services téléphoniques, comprenant le service visé (sous-étape E11). Puis l'utilisateur UA se rend à la caisse du distributeur DC, ou à une caisse de celui-ci spécialisée pour le paiement des cartes pré-payées, auprès de laquelle il acquitte un prix forfaitaire F du service lié à la carte CP pour une durée maximale de validité de carte lisible sur la carte DM (sous-étape E12). Une zone est grattée sur la carte CP pour y découvrir un premier code, dit code d'identification CI.
   Comme déjà dit à propos de la technique antérieure, les codes d'identification CI associés respectivement aux cartes pré-payées CP offertes à la vente sont pré-mémorisés dans un serveur, en l'occurrence le serveur de fourniture de service SFS, mais également selon l'invention dans le serveur d'identification et de configuration SIC. Chaque code CI n'est maintenu en mémoire dans le serveur SIC que tant que celui-ci n'a pas été authentifié à l'étape E4 selon l'invention, ce qui interdit ultérieurement tout accès au service visé dans le serveur SFS, et est également maintenu en mémoire dans le serveur SFS pendant la durée de validité de la carte associée CP. Les codes CI sont des codes alphanumériques à plusieurs caractères, par exemple des codes à 13 ou 14 chiffres.
   En échange du code CI lu sur la carte CP qui a été payée, la caissière consulte un fichier de codes qui fait correspondre de manière biunivoque au code lu CI un deuxième code, dit code d'activation CA, qui est délivré par la caissière à l'utilisateur UA, par exemple en l'inscrivant sur la facture de paiement de la carte, à l'étape E2. Le code d'activation délivré CA sert, selon l'invention, à autoriser l'authentification du premier code, le code d'identification CI de la carte CP, de manière à déverrouiller l'accès au service visé. En méconnaissance du code d'activation CA, un voleur de la carte CP est incapable d'accéder au service visé même s'il tente d'appeler le serveur de fourniture de service SFS et de lui transmettre le code d'identification CI apparaissant sur la carte après grattage.
   Le code d'activation CA est une suite de caractères alphanumériques, par exemple au nombre de 10 à 15 chiffres. Selon une caractéristique de l'invention, le code d'activation CA peut comprendre, outre une variable associée de manière biunivoque au service à activer, en l'occurrence au répondeur-enregistreur téléphonique visé, et/ou à une particularité du service à activer, par exemple une limite de validité de la carte ou une plage horaire ou une période de fonctionnement du service à activer, en l'occurrence du répondeur-enregistreur,
- une valeur de la carte pré-payée, en l'occurrence le forfait F qui peut être par exemple de 100 francs pour une durée DM de trois mois, ou de 300 francs pour une durée DM d'un an ; et/ou un numéro de facture d'achat de la carte pré-payée notamment pour parer à un éventuel "rechargement" de l'accès au service dans le serveur SFS ;
- un identificateur du type du service à activer lorsque la carte CA peut donner accès a priori à un service sélectionné parmi un ensemble de services par exemple téléphoniques ; dans ce cas, l'utilisateur UA précise à la caissière le type du service afin que celle-ci recherche le code d'activation CA dans le fichier correspondant au service ;
- un identificateur du fournisseur du service à activer gérant notamment le serveur SFS, en l'occurrence un opérateur téléphonique selon cette réalisation ; et
- un identificateur de l'émetteur de la carte, en l'occurrence le distributeur-commerçant DC.

Au moyen du terminal TE, l'utilisateur acheteur UA exécute les étapes d'authentification E3 et E4 en coopération avec le serveur vocal SV.

Au début de la première étape d'authentification E3, l'utilisateur demande depuis le terminal TE l'établissement d'un appel de départ en prenant la liaison de télécommunications correspondant, ligne et/ou canal, et en composant le numéro d'appel, qui peut être une adresse IP (Internet Protocol), du serveur vocal SV qui se connecte alors au serveur d'activation SA (sous-étape E31). Un message d'invitation à transmettre le code d'activation CA tel que "Composez le code d'activation et valider par la touche TV" est transmis par le serveur vocal SV au terminal TE.

Il est à noter que les messages transmis par le serveur vocal SV, ou par la suite par le serveur SFS, pour dialoguer avec l'utilisateur devant le terminal TE sont des messages vocaux reproductibles par un haut-parleur ou buzzer du terminal et/ou textuels affichables sur un écran du terminal. La touche TV est une touche prédéterminée de validation, par exemple la touche dièse # sur le clavier d'un poste téléphonique, ou la touche ENTER sur le clavier d'un micro-ordinateur.

L'utilisateur compose ensuite le code d'activation CA délivré précédemment par la caissière, suivi de l'appui de la touche de validation TV (sous-étape E32). En réponse au code CA transmis par exemple sous forme numérique ou en code à multifréquence DTMF (Dual Time Multiple Frequency) selon le type de terminal (sous-étape E33), le serveur SA recherche dans une base de données associée, et plus précisément dans une table le code CA afin de lui faire correspondre une adresse ASFS du serveur de fourniture de service SFS (sous-étape E34), lorsque plusieurs serveurs SFS sont prévus, ainsi qu'un identificateur de service IDS.

Lorsque le code CA comporte plusieurs identificateurs, comme ceux définis ci-dessus, le code CA est analysé par le serveur SA pour rechercher par exemple de manière arborescente la table où le code CA est susceptible de se trouver ; par exemple si le code CA contient un identificateur de fournisseur et un identificateur de type de service, le serveur SA recherche d'abord l'identificateur de fournisseur dans une table des fournisseurs, puis le service dans une table de types de service offerts par le fournisseur désigné par l'identificateur de fournisseur, et enfin la variable, toujours contenue dans le code CA, dans une table de variables désignée par l'identificateur de type de service, lesquelles variables correspondent à des cartes pré-payées non encore utilisées.

A la sous-étape E33, si l'utilisateur a raccroché ou bien n'a pas composé de code CA ou n'a pas appuyé sur la touche de validation TV à l'expiration d'une temporisation prédéterminée de quelques secondes succédant à la sous-étape E32, ou à la sous-étape E34 si le serveur SA n'a pas reconnu le code composé CA et particulièrement la variable dans celui-ci, le serveur SA commande le serveur SV pour libérer la liaison de télécommunications prise à l'étape de fin de procédé E6.

Après la reconnaissance du code d'activation composé CA par le serveur d'activation SA à la sous-étape E34, le serveur SA transmet au serveur SFS un message d'authentification du code d'activation contenant un identificateur IDS du service visé, et efface le code CA dans la table (sous-étape E35). L'identificateur IDS est mémorisé dans une file d'attente du serveur SFS, en attente d'une comparaison (sous-étape ultérieure E46) lors de l'authentification ultérieure du code d'identification CI lu sur la carte.

L'identificateur de service IDS est établi de préférence avec tout ou partie du code d'activation authentifié CA. Par exemple, l'identificateur IDS comporte la variable, la valeur de la carte et l'identificateur de type de service. En variante, l'identificateur IDS est lu en correspondance au code reconnu CA dans le serveur SA. Le serveur SFS est adressé en dépendance de l'adresse ASFS lue dans la table où le code CA a été trouvé. Par exemple, plusieurs serveurs SFS sont attribués à différents fournisseurs de service, et chaque fournisseur de service gère plusieurs serveurs SFS offrant chacun un ou plusieurs services respectifs prédéterminés ; selon l'exemple illustré, il a été supposé que le serveur SFS offrait un service de répondeur-enregistreur téléphonique pour un opérateur téléphonique.

L'effacement du code CA dans le serveur à la sous sous-étape E35 interdit ultérieurement toute activation de service avec le code CA que pourrait tenter une personne malintentionnée.

A la fin de la première étape d'authentification E3, après la reconnaissance du code d'activation composé CA dans une table du serveur SA (sous-étape E34), le procédé d'activation de service se poursuit par la deuxième étape d'authentification E4. La reconnaissance du code CA est signalée au niveau de l'utilisateur UA par la réception d'un message d'invitation à transmettre le code d'identification CI, transmis par le serveur vocal SV au terminal TE sous la commande du serveur SA (sous-étape E41). Le serveur SV libère alors le serveur SA et prépare une communication avec le serveur d'identification et de configuration SIC.

En réponse au message précédent, l'utilisateur compose au clavier du terminal TE le code d'identification CI lu, après grattage antérieur, sur la carte pré-payée CP et appuie sur la touche d'authentification TV (sous-étape E42). Le code CI est transmis à travers le serveur SV au serveur SIC, de la même manière que le code CA. Le serveur SIC recherche dans une table de codes d'identification pour cartes pré-payées non encore utilisées, le code composé et transmis CI (sous-étape E43). Si le code CI est détecté dans la table, l'adresse ASFS du serveur SFS correspondant au code CI est lue dans la table. Puis le serveur SFS désigné par l'adresse lue ASFS reçoit du serveur SIC un message contenant le code d'identification CI. Le serveur SIC efface ensuite (sous-étape E44) le code CI de manière à interdire dans le serveur SIC toute autre identification d'une carte avec le code transmis CI.

En réponse au code d'identification authentifié CI dernièrement transmis, le serveur SFS recherche ce code CI dans une table qui fait correspondre à chaque code CI associé à un service proposé par le serveur SFS, un identificateur de service respectif IDS (sous-étape E45). Si un identificateur IDS existe en correspondance avec le code authentifié transmis CI dans la table, le serveur SFS recherche (sous-étape E46) dans la file d'attente des identificateurs IDS dernièrement transmis par le serveur SA ou par plusieurs serveurs analogues SA, et reçus par le serveur SFS, un identificateur identique à l'identificateur lu IDS en correspondance dans la table afin d'activer le service associé au premier code CI et au deuxième code CA (sous-étape E47).

L'activation du service, en l'occurrence du répondeur-enregistreur, consiste par exemple au marquage du code CI, soit en effaçant l'identificateur de service correspondant IDS dans la table du serveur SFS, soit en changeant de "0" à "1" l'état d'un bit d'activation de service BAS associé au code d'identification CI dans la table. Ainsi, la table de correspondance dans le serveur SFS contient des couples (CI, IDS) ou des triplets (CI, IDS, BAS = "0") lorsque la carte pré-payée CP avec le code CI n'a pas encore été utilisée, et des couples (CI, 0) ou des triplets (CI, IDS, BAS = "1") lorsque la carte CP a déjà été utilisée pour activer le service visé selon le procédé de l'invention décrit ci-dessus.

L'activation du service suite au marquage du code CI est confirmée par le serveur SFS au serveur SIC qui commande au serveur SV la transmission d'un message d'authentification de code d'identification vers le terminal TE (sous-étape E48), ce qui met fin au procédé d'activation du service visé selon l'invention, à l'étape E6, en l'absence de configuration du service activé.

Comme aux sous-étapes E33 et E34, si à la sous-étape E42 l'utilisateur a raccroché ou le code CI n'est pas composé ou la touche TV n'est pas sollicitée après une temporisation prédéterminée de quelques secondes succédant à la transmission du message à la sous-étape E41, ou si à la sous-étape E43, le serveur SIC n'a pas reconnu le code composé CI, ou bien encore si à la sous-étape E45, le code CI transmis n'est pas retrouvé dans le serveur SFS, ou si les identificateurs IDS comparés sans le serveur SFS sont différents à la sous-étape E46, le serveur SV libère la liaison avec le terminal TE sous la commande du serveur SIC et le cas échéant du serveur SFS.

Le serveur SFS programme le service activé notamment en fonction des paramètres portés par l'identificateur IDS. Par exemple, lorsque l'identificateur IDS porte la valeur de la carte liée à une durée maximale d'utilisation DM du service activé, la durée DM est mémorisée et une variable de durée DU dans un compteur de durée associé au service activé est mise à zéro dans le serveur SFS.

Après l'authentification du code d'identification à l'étape E4, le serveur d'identification et de configuration SIC initie optionnellement un dialogue avec le terminal TE de l'utilisateur UA via le serveur vocal SV pour configurer le service précédemment activé dans le serveur SFS à la sous-étape E47.

Cette configuration du service activé consiste à collecter à travers les serveurs SV et SIC des paramètres et désignations de fonctions particulières depuis le terminal TE afin de programmer le service activé dans le serveur de fourniture de service SFS avant l'utilisation réelle du service. Pour le répondeur-enregistreur téléphonique activé, le serveur SFS recueille auprès du terminal TE de l'utilisateur notamment le numéro d'appel de la ligne téléphonique fixe d'usager à laquelle le répondeur-enregistreur doit être connecté, la plage horaire pendant laquelle le répondeur-enregistreur est connecté à la ligne, et le numéro d'appel de la ligne ou du canal du terminal téléphonique, y compris radiotéléphonique, vers lequel un message court doit être transmis par le serveur SFS en réponse au dépôt d'un message dans le répondeur-enregistreur.

Après l'étape E4, ou optionnellement après l'étape E5, le procédé se termine par la libération de la liaison entre le terminal TE et le serveur SV à l'étape E6.

Ultérieurement, lorsque l'utilisateur UA souhaite accéder au service, celui-ci suit les étapes **d'utilisation de service activé** U1 à U8 montrées à la figure 3, concernant des échanges entre le terminal TE et le serveur de fourniture de service SFS.

Depuis le terminal TE, ou tout autre terminal, l'utilisateur UA appelle le serveur SFS en composant son numéro d'appel (étape U1). Puis après transmission d'un message vocal et/ou textuel d'invitation à transmettre le code CI par le serveur SFS au terminal (étape U2), l'utilisateur compose le code d'identification CI lu sur la carte pré-payée CP et appuie sur la touche de validation TV (étape U3).

Le serveur SFS recherche le code composé CI transmis par le terminal TE dans la table de code d'identification (étape U4). Si le code composé CI est reconnu dans la table, le serveur SFS vérifie que le service associé au code reconnu CI est activé en constatant que l'identificateur associé IDS est effacé, ou bien que l'indicateur d'activation de service BAS est à l'état activé "1" (étape U5). En général, le service activé ayant une durée limitée, le serveur vérifie ensuite que la durée maximale DM n'a pas expiré en comparant la durée courante DU à DM (étape U6). Pour DU < DM, le serveur autorise alors l'accès au service activé (étape U7) ; en l'occurrence, l'utilisateur interroge le serveur SFS pour écouter les derniers messages enregistrés par le répondeur-enregistreur, en effacer certains, ou bien pour modifier des paramètres du répondeur-enregistreur, comme la plage horaire de fonctionnement par exemple.

Comme aux étapes E33 et E42, si l'utilisateur a raccroché, ou bien si aucun code CI n'a été composé ou si la touche TV n'a pas été sollicitée à l'étape U3, le serveur SFS libère la liaison avec le terminal à l'étape U8.

De même, si le serveur SFS ne trouve pas dans sa table le code d'identification CI transmis par le terminal à l'étape U4, ou si un identificateur IDS, ou en variante un indicateur BAS à l'état désactivé "0", est associé au code transmis et reconnu CI à l'étape U5, le procédé passe à l'étape de fin U8.

A l'étape U6, si la durée maximale d'utilisation DM est atteinte, le serveur SFS efface dans la table le code d'identification CI à l'étape E61 de manière à interdire toute utilisation ultérieure du service par l'intermédiaire du code CI, puis libère la liaison avec le terminal TE à l'étape E8. L'opérateur met à jour la table en affectant périodiquement de nouveaux codes CI et de nouveaux indicateurs IDS associés à des nouveaux codes CA, aux répondeurs-enregistreurs qui ne sont plus utilisés, en correspondance avec des cartes à mettre en vente.

Selon une autre application, le service visé consiste à consommer des unités de communication téléphonique pré-payées lors de l'achat d'une carte pré-payée CP ayant un crédit de consommation prédéterminé F. Pour cette application, le serveur de fourniture de service SFS associe à chaque couple de codes (CI, CA) ou (CI, IDS) un compteur d'unités téléphoniques qui contient initialement le crédit F et qui est décrémenté d'unités téléphoniques au fur et à mesure du déroulement de communications téléphoniques de départ établies en utilisant le code CI. Les étapes E1 à E6 pour l'activation du compteur sont exécutées comme décrit en référence à la figure 2, en supprimant l'étape de configuration E5 qui n'a aucune utilité dans cette deuxième réalisation.

Selon encore une autre application, le service visé consiste en des achats de produits offerts virtuellement sur l'écran du terminal TE de l'utilisateur par un serveur SFS géré par une centrale d'achat de produits. Cette application est similaire à la deuxième application précédente ; au lieu de consommer des unités téléphoniques, l'utilisateur consomme des unités monétaires jusqu'à épuisement du crédit F lié à la carte pré-payée CP.

Selon une autre variante, les sous-étapes d'authentification (E32 à E35) proprement dites pour authentifier le code d'activation CA dans le serveur SA peuvent succéder aux sous-étapes d'authentification proprement dites E41 à E44 pour authentifier le code d'identification CI dans le serveur SIC. Toutefois, cette variante a pour inconvénient de laisser dialoguer le serveur d'identification SIC avec un voleur de carte pré-payée, et donc d'occuper inutilement le serveur SIC, jusqu'à ce que le serveur SA constate normalement que le code CA émis par le voleur n'appartient pas à la liste mémorisée dans le serveur SA.

Selon une variante plus simple de la réalisation illustrée à la figure 2, le serveur de fourniture de service SFS ne contient qu'une liste de codes d'identification CI, sans liste correspondante d'identificateur IDS ou de code d'activation CA, si bien que le service visé est réputé activé dès que le serveur SFS reconnaît le code CI transmis par le serveur SIC à la sous-étape E44. Pour cette variante, la caissière fournit le code d'activation CA indépendamment du code CI lu sur la carte ; en outre, l'identificateur IDS n'existe pas, si bien qu'il n'est pas transmis à la sous-étape E35 et n'est pas recherché, lu et effacé aux sous-étapes E45, E46 et E47.

S'agissant de la carte pré-payée virtuelle CP, celle-ci au lieu d'être "immatérielle" et réduite au code d'identification CI à gratter, peut être "matérielle" et contenir un circuit intégré contenant une mémoire dans laquelle le code d'identification CI est pré-enregistré, ou bien est calculé de manière cryptographique à chaque utilisation, et dans laquelle le code d'activation CA est enregistré lors du paiement de la carte devant la caissière à l'étape E2. Dans ce cas, la caissière possède un terminal ayant un lecteur-enregistreur de carte, comme le terminal d'utilisateur TE, pour dialoguer avec la carte et y écrire le code d'activation CA, et les transmissions des codes CA et CI aux sous-étapes E33 et E42 s'effectuent depuis la carte CP à travers le terminal TE.

L'invention n'est pas limitée à l'architecture fonctionnelle illustrée à titre d'exemple à la figure 1. Par exemple, les serveurs SV, SA et SIC peuvent être confondus en un serveur unique, ou bien les serveurs SIC et SFS peuvent être confondus en un unique serveur, ou bien le serveur SFS peut être réparti en plusieurs serveurs ou groupes de serveurs associés respectivement à des services différents, ou être réparti en un serveur gérant les paramètres tels que coût et durée liés au service et un serveur fournissant le service proprement dit à activer.

## Revendications

1. Procédé pour activer un service à l'aide d'une carte pré-payée (CP) dans un moyen de fourniture de service (SFS) depuis un moyen terminal d'utilisateur (TE), un premier code (CI) nécessaire à l'utilisation du service étant associé à la carte et mémorisé dans le moyen de fourniture de service préalablement au paiement de la carte, **caractérisé en ce qu'**il comprend les étapes successives suivantes de
- fournir (E2) un deuxième code (CA) associé à la carte et délivré à l'utilisateur lors du paiement de la carte,
- authentifier (E3) le deuxième code (CA) transmis par le moyen terminal (TE) dans un premier moyen d'authentification (SA),
- authentifier (E4) le premier code (CI) transmis par le moyen terminal (TE) dans un deuxième moyen d'authentification (SIC), lorsque le deuxième code est authentifié, et
- activer (E47) le service dans le moyen de fourniture de service (SFS) en réponse au moins au premier code authentifié (CI) transmis par le deuxième moyen d'authentification (SIC).

2. Procédé conforme à la revendication 1, selon lequel le deuxième code (CA) comprend au moins l'un des paramètres suivants : une limite de validité de la carte pré-payée, une plage horaire ou une période de fonctionnement du service à activer, une valeur (F, DM) de la carte pré-payée (CP), un numéro de facture de la carte pré-payée, un identificateur du type du service à activer, un identificateur du fournisseur du service à activer, et un identificateur de l'émetteur de la carte.

3. Procédé conforme à la revendication 1 ou 2, selon lequel chaque étape d'authentifier (E3, E4) un code (CA, CI) comprend les étapes de :
transmettre (E33 ; E42) le code depuis le moyen terminal (TE) vers le moyen d'authentification (SA,SiC) ayant pré-mémorisé une liste de codes,
rechercher (E34 ; E43) le code transmis dans le moyen d'authentification, et
effacer (E35, E44) le code pré-mémorisé en réponse au code transmis trouvé dans le moyen d'authentification, et poursuivre le procédé.

4. Procédé conforme à l'une quelconque des revendications 1 à 3, selon lequel des premier et deuxième moyen d'authentification (SA,SIC) communiquent avec le moyen terminal (TE) à travers un serveur de message au moins vocal (SV).

5. Procédé conforme à l'une quelconque des revendications 1 à 4, selon lequel le deuxième serveur (SA) transmet (E35) un identificateur de service (IDS) qui est de préférence tout ou partie du deuxième code (CA) au moyen de fourniture de service (SFS), et le service est activé (E47) lorsque le premier code authentifié (CI) transmis par le deuxième moyen d'autentification (SIC) au moyen de fourniture de service est retrouvé (E45, E46) en correspondance avec l'identificateur de service dans une table pré-mémorisée du moyen de fourniture de service (SFS).

6. Procédé conforme à la revendication 5, selon lequel le moyen de fourniture de service (SFS) est désigné par une adresse (ASFS) en correspondance avec les premier et deuxième codes (CI, CA) authentifiés dans les deuxième et premier moyens d'authentification (SA,SiC) afin de transmettre depuis ceux-ci le premier code authentifié (CI) et l'identificateur de service (IDS) au moyen de fourniture de service.

7. Procédé conforme à l'une quelconque des revendications 1 à 6, selon lequel le service est réputé activé quand le moyen de fourniture de service (SFS) efface (E47) un identificateur de service (IDS) qui est de préférence tout ou partie du deuxième code authentifié (CA), ou change d'état un indicateur d'activation de service (BAS), dans une table pré-mémorisée du moyen de fourniture de service, après que le premier code authentifié (CI) soit retrouvé (E45) en correspondance avec l'identificateur de service ou avec l'indicateur d'activation de service à un état prédéterminé.

8. Procédé conforme à la revendication 7, selon lequel, lors de l'utilisation de la carte (CP), le moyen de fourniture de service (SFS) n'autorise (U5) l'accès au service activé qu'en réponse au premier code (CI) transmis par le moyen terminal (TE) et à une vérification d'une absence d'identificateur de service (IDS) ou d'un autre état prédéterminé de l'indicateur d'activation de service (BAS) en correspondance avec le premier code (CI) dans la table.

9. Procédé conforme à l'une quelconque des revendications 1 à 8, comprenant une étape de configurer (E5) le service activé en collectant des paramètres et/ou désignations de fonctions depuis le moyen terminal (TE) pour programmer ledit service dans le moyen de fourniture de service (SFS).

10. Procédé conforme à l'une quelconque des revendications 1 à 9, selon lequel la carte pré-payée (CP) est une carte pré-payée virtuelle immatérielle sur laquelle le premier code (CI) est lisible, ou une carte pré-payée virtuelle matérielle dans laquelle le premier code (CI) est pré-enregistré et le deuxième code (CA) est enregistré (E2) lors du paiement de la carte.

11. Procédé conforme à l'une quelconque des revendications 1 à 10, selon lequel le service consiste à dédier un répondeur-enregistreur à une ligne téléphonique fixe sélectionnée (E5) après l'activation du service (E47).

## Claims

1. Method of activating a service using a prepaid card (CP) in service provision means (SFS) from user terminal means (TE), a first code (CI) necessary to use the service being associated with the card and stored in the service provision means prior to payment for the card, **characterized in that** it includes the following successive steps of:
- delivering (E2) a second code (CA) associated with the card and delivered to the user on paying for the card,
- authenticating (E3) the second code (CA) sent by the terminal means (TE) in a first authentication means (SA),
- authenticating (E4) the first code (CI) sent by the terminal means (TE) in a second authentication means (SIC), when the second code has been authenticated, and
- activating (E47) the service in the service provision means (SFS) at least in response to the authenticated first code (CI) sent by the second authentication means (SIC).

2. Method according to Claim 1, in which the second code (CA) includes at least one of the following parameters: a validity limit of the prepaid card, a time band or period of operation of the service to be activated, a value (F, DM) of the prepaid card (CP), a prepaid card receipt number, an identifier of the type of service to be activated, an identifier of the provider of the service to be activated, and an identifier of the issuer of the card.

3. Method according to Claim 1 or 2, in which each step (E3, E4) of authenticating a code (CA, CI) includes the steps of:
sending (E33; E42) the code from the terminal means (TE) to the authentication means (SA, SIC) having a prestored list of codes,
searching (E34; E43) for the code sent in the authentication means, and
deleting (E35, E44) the prestored code in response to the code sent and found in the authentication means, and continuing the method.

4. Method according to any one of Claims 1 to 3, in which the first and second authentication means (SA, SIC) communicate with the terminal means (TE) via a message server (SV) providing at least voice messaging.

5. Method according to any one of Claims 1 to 4, in which the second server (SA) sends (E35) a service identifier (IDS), which is preferably all or part of the second code (CA), to the service provision means (SFS) and the service is activated (E47) when the authenticated first code (CI) sent by the second authentication means (SIC) to the service provision means is found (E45, E46) in correspondence with the service identifier in a prestored table of the service provision means (SFS).

6. Method according to Claim 5, in which the service provision means (SFS) are designated by an address (ASFS) in correspondence with the first and second codes (CI, CA) authenticated in the second and first authentication means (SA, SIC) in order to send the authenticated first code (CI) and the service identifier (IDS) therefrom to the service provision means.

7. Method according to any one of Claims 1 to 6, in which the service is deemed to be activated when the service provision means (SFS) deletes (E47) a service identifier (IDS), which is preferably all or part of the authenticated second code (CA), or changes the state of a service activation indicator (BAS), in a prestored table of the service provision means, after the authenticated first code (CI) is found (E45) in correspondence with the service identifier or with the service activation indicator in a predetermined state.

8. Method according to Claim 8, in which, when the card (CP) is used, the service provision means (SFS) authorizes (U5) access to the activated service only in response to the first code (CI) sent by the terminal means (TE) and to verification of the absence of a service identifier (IDS) or a predetermined other state of the service activation indicator (BAS) in correspondence with the first code (CI) in the table.

9. Method according to any one of Claims 1 to 8, including a step (E5) of configuring the activated service by collecting parameters and/or designations of functions from the terminal means (TE) for programming said service in the service provision means (SFS).

10. Method according to any one of Claims 1 to 9, in which the prepaid card (CP) is a non-material virtual prepaid card on which the first code (CI) can be read or a material virtual prepaid card in which the first code (CI) is prerecorded and the second code (CA) is recorded (E2) on paying for the card.

11. Method according to any one of Claims 1 to 10, in which the service consists in dedicating a voicemail box to a fixed telephone line selected (E5) after activating the service (E47).

## Patentansprüche

1. Verfahren zur Aktivierung eines Diensts mit Hilfe einer Prepaid-Karte (CP) in einer Dienstbereitstellungseinrichtung (SFS) ausgehend von einer Benutzerterminaleinrichtung (TE), wobei der Karte ein erster für die Nutzung des Diensts notwendiger Code (CI) zugeordnet und in der Dienstbereitstellungseinrichtung vor dem Bezahlen der Karte gespeichert wird, **dadurch gekennzeichnet, dass** es die folgenden aufeinanderfolgenden Schritte aufweist:
- Liefern (E2) eines zweiten der Karte zugeordneten und beim Bezahlen der Karte an den Benutzer ausgegebenen Codes (CA),
- Authentifizieren (E3) des von der Terminaleinrichtung (TE) übertragenen zweiten Codes (CA) in einer ersten Authentifizierungseinrichtung (SA),
- Authentifizieren (E4) des von der Terminaleinrichtung (TE) übertragenen ersten Codes (CI) in einer zweiten Authentifizierungseinrichtung (SIC), wenn der zweite Code authentifiziert ist, und
- Aktivieren (E47) des Diensts in der Dienstbereitstellungseinrichtung (SFS) als Antwort mindestens auf den ersten authentifizierten Code (CI), der von der zweiten Authentifizierungseinrichtung (SIC) übertragen wird.

2. Verfahren nach Anspruch 1, bei dem der zweite Code (CA) mindestens einen der nachfolgenden Parameter aufweist: eine Gültigkeitsbegrenzung der Prepaid-Karte, eine Zeitspanne oder eine Betriebsperiode des zu aktivierenden Diensts, einen Wert (F, DM) der Prepaid-Karte (CP), eine Rechnungsnummer der Prepaid-Karte, eine Kennung des Typs des zu aktivierenden Diensts, eine Kennung des Bereitstellers des zu aktivierenden Diensts, und eine Kennung des Ausstellers der Karte.

3. Verfahren nach Anspruch 1 oder 2, bei dem jeder Schritt des Authentifizierens (E3, E4) eines Codes (CA, CI) die folgenden Schritte aufweist:
- Übertragen (E33; E42) des Codes von der Terminaleinrichtung (TE) zur Authentifizierungseinrichtung (SA, SIC), die eine Liste von Codes voreingespeichert hat,
- Suchen (E34; E43) des übertragenen Codes in der Authentifizierungseinrichtung, und
- Löschen (E35, E44) des voreingespeicherten Codes als Antwort auf den übertragenen Code, der in der Authentifizierungseinrichtung gefunden wurde, und Fortsetzung des Verfahrens.

4. Verfahren nach einem der Ansprüche 1 bis 3, bei dem die erste und die zweite Authentifizierungseinrichtung (SA, SIC) über einen mindestens Sprachmitteilungsserver (SV) mit der Terminaleinrichtung (TE) kommunizieren.

5. Verfahren nach einem der Ansprüche 1 bis 4, bei dem der zweite Server (SA) eine Dienstkennung (IDS), die vorzugsweise der ganze oder ein Teil des zweiten Codes (CA) ist, an die Dienstbereitstellungseinrichtung (SPS) überträgt (E35), und der Dienst aktiviert wird (E47), wenn der erste authentifizierte Code (CI), der von der zweiten Authentifizierungseinrichtung (SIC) an die Dienstbereitstellungseinrichtung übertragen wird, entsprechend der Dienstkennung in einer voreingespeicherten Tabelle der Dienstbereitstellungseinrichtung (SFS) wiedergefunden wird (E45, E46).

6. Verfahren nach Anspruch 5, bei dem die Dienstbereitstellungseinrichtung (SFS) durch eine Adresse (ASFS) entsprechend dem ersten und dem zweiten Code (CI, CA) bezeichnet wird, die in der zweiten und der ersten Authentifizierungseinrichtung (SA, SIC) authentifiziert werden, um von ausgehend von diesen den ersten authentifizierten Code (CI) und die Dienstkennung (IDS) an die Dienstbereitstellungseinrichtung zu übertragen.

7. Verfahren nach einem der Ansprüche 1 bis 6, bei dem der Dienst als aktiviert betrachtet wird, wenn die Dienstbereitstellungseinrichtung (SFS) eine Dienstkennung (IDS) löscht (E47), die vorzugsweise der ganze oder ein Teil des zweiten authentifizierten Codes (CA) ist, oder den Zustand einer Dienstaktivierungskennung (BAS) in einer voreingespeicherten Tabelle der Dienstbereitstellungseinrichtung ändert, nachdem der erste authentifizierte Code (CI) entsprechend der Dienstkennung oder der Dienstaktivierungskennung in einem vorbestimmten Zustand wieder gefunden wird (E45).

8. Verfahren nach Anspruch 7, bei dem während der Verwendung der Karte (CP) die Dienstbereitstellungseinrichtung (SFS) den Zugriff zum aktivierten Dienst nur als Antwort auf den von der Terminaleinrichtung (TE) übertragenen ersten Code (CI) und auf eine Überprüfung der Abwesenheit einer Dienstkennung (IDS) oder eines anderen vorbestimmten Zustands der Dienstaktivierungskennung (BAS) entsprechend dem ersten Code (CI) in der Tabelle erlaubt (U5).

9. Verfahren nach einem der Ansprüche 1 bis 8, das einen Schritt der Konfiguration (E5) des aktivierten Diensts aufweist, indem Parameter und/oder Bezeichnungen von Funktionen ausgehend von der Terminaleinrichtung (TE) gesammelt werden, um den Dienst in der Dienstbereitstellungseinrichtung (SFS) zu programmieren.

10. Verfahren nach einem der Ansprüche 1 bis 9, bei dem die Prepaid-Karte (CP) eine virtuelle immaterielle Prepaid-Karte, auf der der erste Code (CI) lesbar ist, oder eine virtuelle materielle Prepaid-Karte ist, auf der der erste Code (CI) voraufgezeichnet ist und der zweite Code (CA) beim Bezahlen der Karte aufgezeichnet wird (E2).

11. Verfahren nach einem der Ansprüche 1 bis 10, bei dem der Dienst darin besteht, nach der Aktivierung des Diensts (E47) einer ausgewählten festen Telefonleitung (E5) einen Anrufbeantworter zuzuteilen.
